Europäisches Patentamt

European Patent Office

Office européen des brevets

(19)

(11) **EP 0 535 127 B1**

(12) **FASCICULE DE BREVET EUROPEEN**

(45) Date de publication et mention
de la délivrance du brevet:
**09.09.1998 Bulletin 1998/37**

(51) Int Cl.6: **G02F 1/137**

(21) Numéro de dépôt: **91912195.4**

(22) Date de dépôt: **21.06.1991**

(86) Numéro de dépôt international:
**PCT/FR91/00496**

(87) Numéro de publication internationale:
**WO 92/00546 (09.01.1992 Gazette 1992/02)**

(54) **AFFICHEUR A CRISTAL LIQUIDE NEMATIQUE, A BISTABILITE DE SURFACE, COMMANDE PAR EFFET FLEXOELECTRIQUE**

NEMATISCHE FLÜSSIGKRISTALLANZEIGE MIT OBERFLÄCHENINDUZIERTER BISTABILITÄT UND STEUERUNG DURCH DEN FLEXOELEKTRISCHEN EFFEKT

NEMATIC LIQUID CRYSTAL DISPLAY, HAVING SURFACE BISTABILITY AND CONTROLLED BY A FLEXOELECTRICAL EFFECT

(84) Etats contractants désignés:
**DE FR GB IT**

(30) Priorité: **22.06.1990 FR 9007847**
**19.09.1990 FR 9011548**

(43) Date de publication de la demande:
**07.04.1993 Bulletin 1993/14**

(73) Titulaire: **CENTRE NATIONAL DE
LA RECHERCHE SCIENTIFIQUE (CNRS)
75794 Paris Cédex 16 (FR)**

(72) Inventeurs:
• **DURAND, Georges
  F-91400 Orsay (FR)**
• **BARBERI, Riccardo 160 Ave Div. Gen.-Leclerc
  F-91190 Gif-sur-Yvette (FR)**
• **GIOCONDO, Michelle Universita della Calabria
  I-87036 Arcavacata di Rende (IT)**

• **MARTINOT LAGARDE, Philippe, René
  F-91460 Marcoussis (FR)**

(74) Mandataire: **Schrimpf, Robert
Cabinet Regimbeau
26, Avenue Kléber
75116 Paris (FR)**

(56) Documents cités:
EP-A- 0 281 341        EP-A- 0 337 780
EP-A- 0 352 792        WO-A-89/01680
WO-A-89/05993          US-A- 4 701 026

• Molecular Crystals and Liquid Crystals
  Incorporating Nonlinear Optics, volume 179,
  février 1990 (New York, US) A. Strigazzi: "Second
  order elasticity and critical thickness of hybrid
  aligned nematics strongly anchored on the
  planar side", pages 425-433, voir pages 425,426,
  introduction; figure 1

**Description**

La présente invention concerne le domaine des dispositifs optiques à cristaux liquides.

La présente invention a été faite au Laboratoire de Physique des Solides de l'Université de Paris Sud, laboratoire associé au CENTRE NATIONAL DE LA RECHERCHE SCIENTIFIQUE numéro 04 0002.

De nombreux travaux de recherche ont été conduits depuis au moins une quinzaine d'années sur les cristaux liquides.

Différents résultats des travaux de recherche effectués au Laboratoire de Physique des Solides de l'Université Paris Sud sont décrits dans la demande de brevet français déposée le 28 Avril 1982 sous le n° 82 07309 et publiée sous le n° 2 526 177, la demande de brevet français déposée le 23 Octobre 1984 sous le n° 84 16192 et publiée sous le n° 2 572 210, la demande de brevet français déposée le 18 Juin 1985 sous le n° 85 09224 et publiée sous le n° 2 587 506, la demande de brevet français déposée le 14 Mai 1986 sous le n° 86 06916 et publiée sous le n° 2 598 827 ou encore la demande de brevet français déposée le 17 Décembre 1987 sous le n° 87 17660 et publiée sous le n° 2 624 985.

Le document FR-A-2624985 enseigne un dispositif optique à cristaux liquides selon lequel une rugosité de l'ordre de grandeur moléculaire du cristal liquide est définie sur l'une au moins des plaques. Cette rugosité entraîne un gradient d'ordre qui induit une polarisation ordoélectrique associée à un champ dépolarisant qui tend à forcer les molécules de cristal liquide selon une orientation oblique par rapport à la plaque. Le contrôle de l'épaisseur et de la direction préférentielle de rugosité permet de plus de contrôler l'orientation oblique $\psi$ et l'orientation azimutale $\varphi$ des molécules dans une plage continue de variation. Ce dispositif permet également de réaliser des interfaces non polaires pour les afficheurs à smectique C* ferroélectrique.

Par ailleurs, les travaux relatifs aux cristaux liquides ont donné lieu à de nombreuses publications.

La présente invention concerne plus précisément les dispositifs optiques à cristaux liquides dits bistables, c'est-à-dire les dispositifs dans lesquels les molécules des cristaux liquides sont susceptibles d'occuper alternativement deux états stables en l'absence de champ, sous l'effet d'une commande externe. De tels dispositifs optiques bistables se prêtent en particulier à la réalisation d'afficheurs multiplexés.

Différents dispositifs optiques bistables à cristaux liquides ont déjà été proposés.

Le document Applied Physic Letters 40 (12) 1007 (1982) J. Cheng et al décrit par exemple un dispositif à cristaux liquides nématiques présentant deux états stables en volume commutés par un champ électrique externe de commande. Le processus décrit dans ce document n'a pas donné lieu à application pratique. Il présente un temps de commutation très lent et révèle généralement de nombreux défauts de texture.

Le document Applied Physic Letters **36**, 899 (1980), N.A. Clark et al décrit un autre dispositif optique bistable utilisant des cristaux liquides dits Smectiques C* ferroélectriques, et des ancrages de surface dégénérés. Le processus décrit dans ce document présente l'avantage d'un temps de commutation très court et a donné lieu à des applications pratiques. Il ne donne cependant pas totalement satisfaction.

En particulier, dans la pratique, on constate fréquemment qu'au lieu d'un affichage bistable entre deux états symétriques, on obtient des affichages monostables sur des textures tordues dont le contraste est mauvais et qui ne peuvent être multiplexés. Ce phénomène semble dû au fait que l'interface électrode/cristal liquide est polaire.

Le document Applied Physic Letters 11 Décembre 1989, R. Barberi, M. Boix et G. Durand décrit un autre dispositif optique bistable dans lequel la bistabilité est induite par un traitement rugueux contrôlé sur l'une au moins des électrodes transparentes et la commutation est opérée par application d'un champ électrique externe parallèle aux électrodes. Selon ce document, le traitement rugueux peut être obtenu par exemple par évaporation oblique de SiO. Ce document Applied Physic Letter est à rapprocher de la demande de brevet français n° 87 17660 précitée. Le processus décrit dans le -document Applied Physics Letters 11 Décembre 1989 semble prometteur. Les spécialistes ont cependant toujours considéré jusqu'ici, que ce processus présente l'inconvénient majeur de n'être sensible qu'à un champ électrique parallèle aux plaques transparentes du dispositif et d'être totalement insensible à un champ électrique perpendiculaire aux plaques.

Un autre type d'afficheur bistable nématique utilisant la bistabilité d'états d'orientation de surface, dans lequel la commutation contrôlée par des impulsions électriques de polarité définie est basée sur l'emploi d'ions chiraux, est décrit dans la demande de brevet français déposée le 30 Janvier 1990 sous le n° 90 01066.

Le document EP-A-281341 décrit un dispositif optique à cristaux liquides comprenant deux plaques transparentes pourvues d'électrodes de commande et entre lesquelles est placé un matériau cristal liquide cholestérique ou nématique chiral, des moyens d'alimentation électrique aptes à appliquer au dispositif des tensions générant un champ électrique perpendiculaire aux plaques, orientées sélectivement dans un sens ou dans l'autre, et un traitement de surface sur les plaques, pour définir au repos une orientation de l'axe de l'hélice du matériau cholestérique ou nématique chiral, parallèle aux plaques. Au repos, c'est-à-dire en l'absence de champ électrique de commande, le directeur nématique des cellules est orienté perpendiculairement à l'axe de l'hélice. En revanche, lorsqu'un champ électrique est appliqué entre les plaques, le directeur nématique s'incline dans des plans perpendiculaires aux plaques et symétriques au plan transversal à l'axe de l'hélice occupé au repos, selon que le champ électrique est orienté dans un sens ou dans l'autre. Le document EP-A-281341 indique clairement que les états obtenus lors de l'application du champ électrique sont instables. En effet, le directeur nématique reprend son orientation transversale à l'axe de l'hélice lorsque le champ électrique est interrompu.

Le document EP-A-352792 décrit un dispositif optique à cristaux liquides comprenant un cristal liquide nématique pris en sandwich entre deux plaques de confinement optiquement transparentes pourvues chacune d'un traitement de surface, plus précisément par dépôt d'un film objet d'un frottement de direction contrôlée, de sorte que les directions de frottement sur les deux films soient orientées de l'ordre de 90°.

La présente invention a maintenant pour but de proposer un nouveau dispositif optique bistable à cristaux liquides présentant de meilleures performances que la technique antérieure.

Un but important de la présente invention est de proposer un dispositif optique bistable à cristaux liquides à commutation rapide, notamment pour la réalisation de matrices optiques multiplexées à haute résolution.

Un autre but important de la présente invention est de proposer un dispositif optique bistable à cristaux liquides conçu pour être commandé aisément par un champ électrique externe.

Ces buts sont atteints selon la présente invention grâce à un dispositif optique à cristaux liquides conforme aux caractéristiques indiquées en revendication 1 annexée, laquelle est délimitée sous forme de préambule et de partie caractérisante par rapport au document EP-A-281 341.

L'application alternée d'impulsions de champ électrique normal aux plaques, orienté dans un sens puis dans l'autre, permet de commuter la structure du cristal liquide entre les deux configurations stables.

L'effet du champ électrique de commande sera précisé dans la suite de la description.

Selon une autre caractéristique avantageuse de la présente invention, le dispositif comprend des moyens d'alimentation électrique conçus pour appliquer successivement au dispositif :

- au moins une impulsion de commande apte à induire une orientation généralement homéotrope homogène du cristal liquide, puis
- une impulsion de contrôle, d'amplitude plus faible que l'impulsion de commande, et de polarité choisie selon l'état final requis.

Comme cela sera expliqué par la suite, l'impulsion de commande peut faire l'objet de plusieurs variantes. Elle est par ailleurs de polarité quelconque.

L'utilisation d'impulsions de commande et d'impulsions de contrôle permet notamment une commande simple par multiplexage d'un afficheur nématique bistable.

Pour cela, selon une caractéristique avantageuse de la présente invention, le dispositif optique, dans lequel les électrodes de commande sont agencées en N lignes et M colonnes définissant une matrice de NM pixels à leurs intersections, est caractérisé par le fait que les impulsions de commande sont appliquées successivement sur les N électrodes de ligne, tandis qu'à la fin de chaque impulsion de commande, des impulsions de contrôle de polarité respectivement choisie sont appliquées simultanément sur l'ensemble des M électrodes de colonne.

Les impulsions nécessaires au multiplexage du dispositif à cristal liquide sont ainsi beaucoup plus simples que celles utilisées par le passé, notamment pour le multiplexage des smectiques ferroélectriques C*.

Des exemples de signaux de commande jusqu'ici proposés pour les smectiques ferroélectriques C* sont décrits dans les documents suivants : 1) J.M. Geary, Proceedings of SID'85, pp. 128-130 (1985), 2) S.T. Lagerwall, J. Wahl and N.A. Clarck, Proceedings of International Display Research Conference, Ferroelectric Liquid Crystals for Displays, pp. 213-220 (1985), 3) S. Shimoda, K. Ito, T. Harada, M. Taguchi, K. Iwara, M. Kai, Proceedings of Japan Display '86, pp. 460-462 (1986).

Selon la présente invention, l'impulsion de commande peut être une impulsion carré unique, comprendre deux impulsions carré successives de polarité opposées ou encore comprendre une série d'impulsions haute fréquence.

Selon une autre caractéristique avantageuse de la présente invention, l'amplitude des impulsions de commande est comprise entre l et 100 Volts, typiquement entre 10 et 20 Volts, tandis que la durée des impulsions de commande est supérieure à 1 µs, typiquement comprise entre 20 et 50 µs.

Selon une autre caractéristique avantageuse de la présente invention, l'amplitude des impulsions de contrôle est comprise entre 0,1 et 10 Volts, typiquement entre 0,1 et 5 Volts, tandis que la durée des impulsions de contrôle est supérieure à 10 µs, typiquement comprise entre 25 et 50 µs.

Le début des impulsions de contrôle peut coïncider avec la fin des impulsions de commande.

En variante, le début des impulsions de contrôle peut précéder la fin des impulsions de commande.

Il est important que les impulsions de contrôle persistent après la fin des impulsions de commande pendant au moins 10 à 50 µs.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente une vue schématique générale d'un dispositif optique conforme à la présente invention,

- la figure 2 illustre schématiquement les deux configurations stables des molécules,
- la figure 3 représente les états d'orientation de surfaces multistables créés par une évaporation oblique de directions e, par exemple de SiO, sur la figure 3, P désigne une orientation stable planaire, O O' deux orientations métastables obliques, un angle zénithal et un angle azimutal,
- la figure 4 représente une vue en perspective de deux électrodes présentant des directions d'évaporation coplanaires,
- la figure 5A représente une vue zénithale des orientations d'une électrode vue par le cristal liquide,
- la figure 5B représente l'orientation relative de deux électrodes tournées d'un angle azimutal relatif de l'ordre de 45°,
- les figures 6A et 6B représentent deux configurations stables différentes de matériau cristal liquide présentant des polarisations flexoélectriques de composantes normales aux électrodes de sens opposé,
- la figure 7 représente un enregistrement typique de lumière transmise par une cellule conforme à la présente invention suite à l'application d'une impulsion de commande opérant une commutation de configurations stables,
- la figure 8 représente la tension seuil d'impulsion de commande en fonction de la durée d'impulsion pour un afficheur de 1μm d'épaisseur,
- la figure 9 représente le champ seuil de commande en fonction de la durée d'impulsion pour des cellules d'épaisseur variable,
- la figure 10 représente schématiquement un premier exemple de signaux de commande et de signaux de contrôle conformes à la présente invention,
- la figure 11 représente schématiquement un deuxième exemple de signaux de commande et de signaux de contrôle conformes à la présente invention,
- la figure 12 représente sous forme de tableau, les différents états obtenus en fonction des signaux de commande et de contrôle appliqués, et
- la figure 13 représente schématiquement un afficheur matriciel commandé par multiplexage conformément à la présente invention.

## STRUCTURE GENERALE DU DISPOSITIF

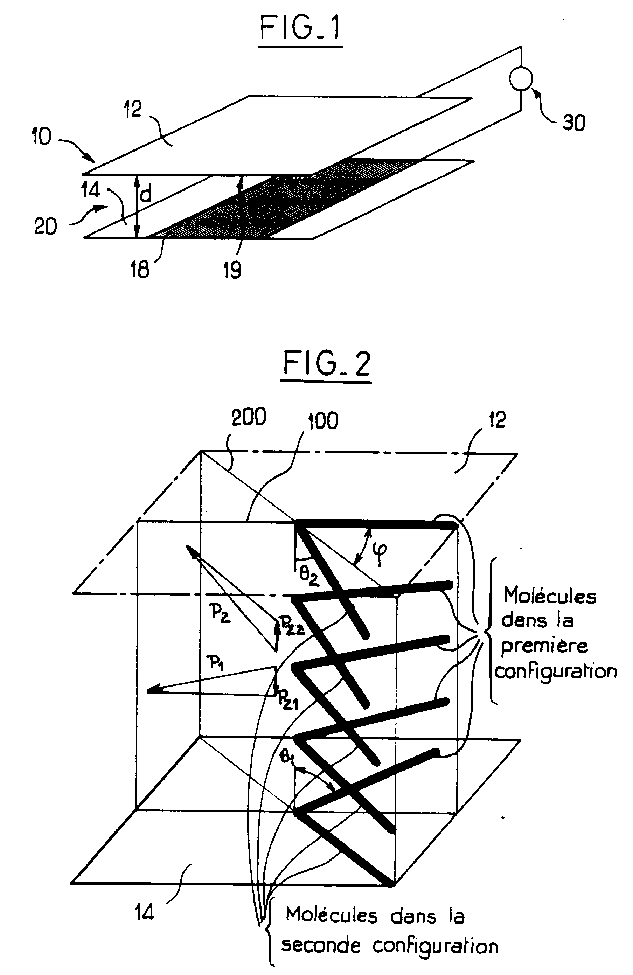

La structure de base connue du dispositif optique utilisé comprend comme représenté schématiquement sur la figure 1 annexée une cellule 10 formée de deux plaques transparentes parallèles 12, 14 par exemple en verre, séparées par une cale d'épaisseur constante d (non représentée sur la figure 1) et entre lesquelles est placé un matériau cristal liquide nématique 20.

Les plaques 12, 14 sont pourvues sur leurs surfaces internes en regard, adjacentes au cristal liquide, d'électrodes électriquement conductrices et optiquement transparentes. Une telle électrode et représentée schématiquement sous forme d'une bande 18, pour la plaque 14, sur la figure 1. L'électrode homologue prévue sur la plaque 12 est référencée 19.

Des moyens d'alimentation électrique 30 sont reliés entre les électrodes prévues sur les deux plaques 12, 14 pour appliquer un champ électrique contrôlé sur le matériau cristal liquide 20. Ces moyens d'alimentation électrique 30 sont avantageusement conçus pour délivrer des impulsions électriques d'une durée comprise entre 1 et 1000ps et d'amplitude comprise entre l et 100 Volt, alternativement de polarités opposées.

## CARACTERISTIQUES ESSENTIELLES DE L'INVENTION

Plus précisément, le dispositif optique conforme à la présente invention présente deux caractéristiques essentielles :

- les deux plaques transparentes 12, 14 présentent un traitement de surface apte à définir deux configurations stables de molécules du matériau cristal liquide, générant respectivement deux polarisations flexoélectriques ayant des composantes normales aux électrodes de sens opposés, et
- les moyens d'alimentation électrique 30 sont couplés aux électrodes 18, 19 de manière à appliquer au dispositif des impulsions de champ électrique perpendiculaire aux plaques, orienté alternativement dans un sens puis dans l'autre.

Les deux configurations stables des molécules du matériau cristal liquide correspondent à deux orientations des molécules dans des plans orthogonaux aux plaques 12, 14 et présentant entre eux une inclinaison azimutable de l'ordre de 45°, de sorte que observée entre analyseurs et polariseurs croisés, la cellule ainsi formée apparaissent alternativement à l'état clair ou foncé selon la configuration occupée par les molécules du matériau de cristal liquide.

Différents types de traitement de surface appropriés seront décrits par la suite.

Selon une autre caractéristique avantageuse de la présente invention, le cristal liquide nématique utilisé présente une anisotropie diélectrique positive.

On a représenté schématiquement sur la figure 2 annexée deux configurations stables des molécules du matériau cristal liquide générant des polarisations flexoélectriques opposées.

On retrouve sur la figure 2 annexée les deux plaques transparentes 12, 14 entre lesquelles est placé le matériau cristal liquide nématique 20.

Lorsque les molécules du matériau cristal liquide 20, sont placées dans une première configuration stable, elles sont orientées selon des plans parallèles au plan référencé 100 sur la figure 2. Le plan 100 est orthogonal aux plaques 12, 14. Dans cette première configuration les molécules du cristal liquide passent progressivement d'une orientation planaire sur la plaque supérieure 12, c'est-à-dire parallèle à cette plaque 12, à une orientation oblique, d'angle zénithal $\theta_1$ sur la plaque inférieure 14.

Lorsque les molécules du matériau cristal liquide 20 sont placées dans la seconde configuration stable, elles sont orientées selon des plans parallèles au plan référencé 200 sur la figure 2. Le plan 200 est orthogonal aux plaques 12, 14. Il présente une inclinaison azimutale $\phi$ de l'ordre de 45° par rapport au plan 100 précité.

Dans la seconde configuration, les molécules du cristal liquide 20 passent progressivement d'une orientation planaire sur la plaque inférieure 14, c'est-à-dire parallèle à cette plaque 14, à une orientation oblique, d'angle zenithal $\theta_2$ sur la plaque supérieure 12.

Ces deux configurations stables génèrent des polarisations flexoélectriques P1, P2 dont les composantes Pz1, Pz2 normales aux électrodes sont opposées, dirigées respectivement vers la plaque inférieure 14 dans la première configuration et vers la plaque supérieure 12 dans la seconde configuration.

## FONCTIONNEMENT

Lorsqu'une tension est appliquée entre les électrodes 18, 19 prévues sur les plaques 12, 14, les molécules du cristal liquide s'orientent perpendiculairement auxdites plaques en raison de leur anisotropie diélectrique positive.

Si l'excitation électrique de la cellule correspond à une impulsion négative sur l'électrode supérieure, à la fin de l'impulsion, il reste près de l'électrode supérieure 19 des ions positifs et près de l'électrode inférieure 18 des ions négatifs qui appliquent un champ électrique dépolarisant et transitoire dirigé de l'électrode supérieure 19 vers l'électrode inférieure 18. Le champ favorise la création de la première configuration qui a une composante de polarisation flexoélectrique Pz1 dirigée aussi de l'électrode supérieure 19 vers l'électrode inférieure 18.

Après le temps de relaxation des charges, le champ dépolarisant disparaît et la première configuration est stable.

Lorque la cellule ainsi formée est observée entre analyseurs et polariseurs croisés, la direction de l'analyseur ou du polariseur étant parallèle au plan 100, la cellule apparaît noire dans la première configuration.

Si ensuite une impulsion positive est appliquée à la cellule les molécules s'alignent perpendiculairement aux plaques 12, 14 pendant l'impulsion. A la fin de cette impulsion, il reste près de l'électrode supérieure 19 des ions négatifs et près de l'électrode inférieure 18 des ions positifs qui appliquent un champ électrique dépolarisant et transitoire dirigé de l'électrode inférieure 18 vers l'électrode supérieure 19.

Ce champ favorise la création de la seconde configuration qui a une composante de polarisation flexoélectrique Pz2 dirigée vers l'électrode supérieure 19.

Après le temps de relaxation des charges, le champ dépolarisant disparaît et la seconde configuration est stable.

La cellule apparaît alors claire.

Pour repasser dans la première configuration, il suffit d'appliquer une impulsion négative à la cellule.

## TRAITEMENT DE SURFACE

Comme indiqué précédemment, différents types de traitement de surface peuvent être utilisés dans le cadre de la présente invention pour contrôler les diverses configurations requises.

Ce traitement de surface peut être formé par exemple du dépôt d'un polymère sur les surfaces internes en regard des plaques 12, 14 suivi de deux frottements du polymère inclinés entre eux, et selon des modalités connues de l'homme de l'art pour imposer l'obliquité souhaitée des molécules sur les plaques.

Selon une autre variante, le traitement de surface peut être formé par contrôle de la rugosité de la surface des plaques 12, 14 (contrôle de l'épaisseur de la rugosité et de son incidence moyenne ou longueur d'onde moyenne) comme enseigné dans la demande de brevet français n° 87 17660 publiée sous le n° 2 624 985.

## MODE DE REALISATION PARTICULIER

On va maintenant décrire la structure et le fonctionnement d'un mode de réalisation particulier du dispositif conforme à la présente invention.

### I - DESCRIPTION DE L'AFFICHEUR

#### a) Matériau

On utilise un cristal liquide nématique, par exemple 5CB, d'anisotropie diélectrique $\varepsilon_a = \varepsilon// - \varepsilon\perp > 0$ ($\varepsilon_a$ est typiquement de l'ordre de 10). Ce cristal liquide peut être dopé par des ions non chiraux de concentration convenable et par un cholestérique, comme cela sera précisé par la suite. Ce nématique est placé dans une cellule dont les deux électrodes ITO sont traitées pour donner des états de surfaces bistables.

#### b) Textures utilisées

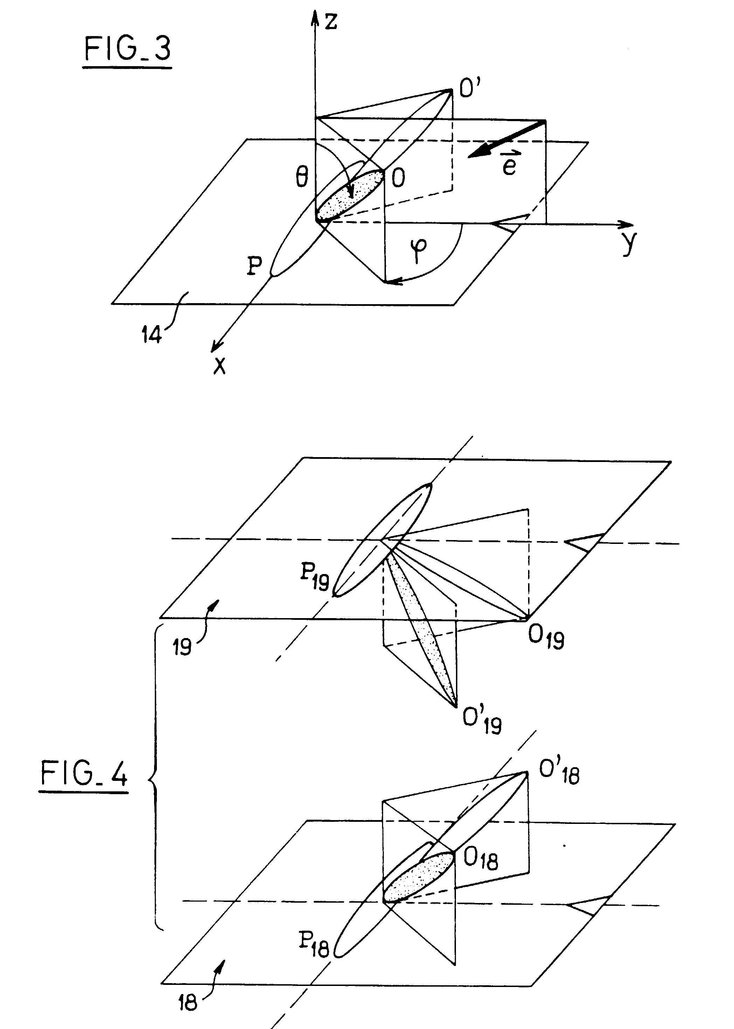

On crée des états d'orientation multistables de surface, par une évaporation de SiO à l'angle de 74°, de faible épaisseur moyenne $\sigma$ ($\sigma \approx 30$ Å). Des expériences préliminaires ont montré que dans ces conditions, l'état d'orientation moléculaire stable est un état planaire P (molécules parallèles à l'électrode, et perpendiculaires à la direction d'évaporation comme représenté sur la figure 3), mais il existe aussi deux états métastables obliques (O, O') d'angle zénithal θ≃75° et d'azimut φ= ±45 par rapport à la direction d'évaporation (voir figure 3).

Sur la figure 3 annexée la direction d'évaporation est référencée e.

Par rapport à la publication "M. Monkade, M. Boix, G. Durand, Order electricity and oblique nematic orientation on rough solid surfaces, Europhys. Lett., 5(8), pp. 697-702(1988)", on se trouve juste en-dessous de la zone de transition planaire - oblique dégénérée.

La figure 4 représente en perspective les trois états de surfaces ainsi réalisés, un stable planaire P et deux obliques métastables 0 et 0' sur chacune des deux plaques, dans le cas de direction d'évaporation coplanaires. Les deux électrodes 19 (en haut) et 18 (en bas) représentées sur la figure 4 sont identiques.

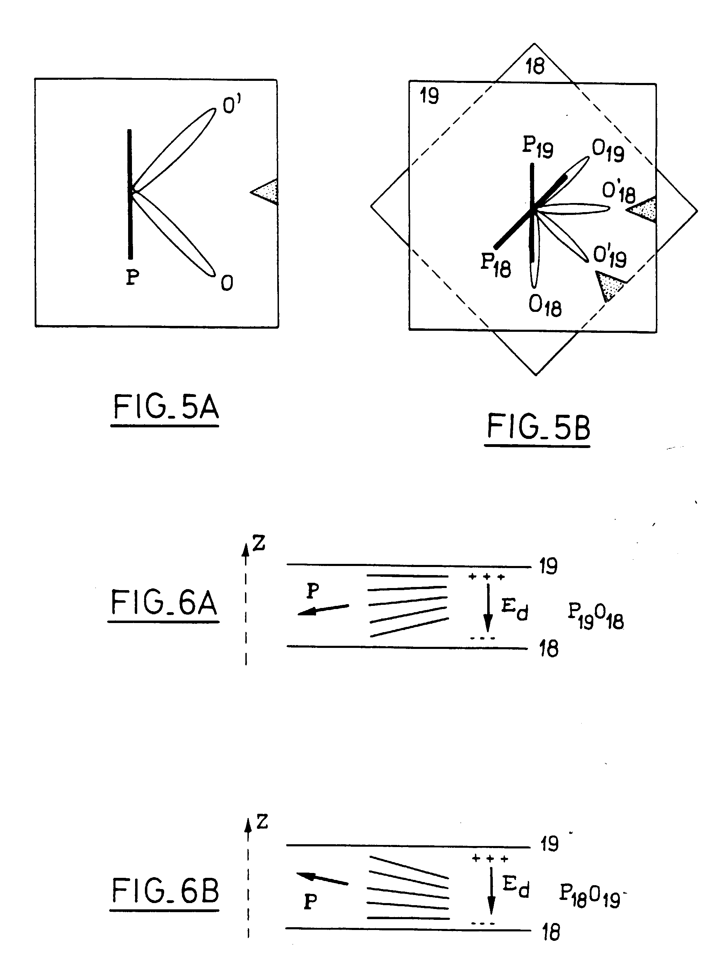

La figure 5A représente une vue zénithale des orientations d'une électrode vue par le cristal liquide.

Comme représenté sur la figure 5B, les deux électrodes font l'objet d'une rotation relative de 45° autour d'un axe z qui leur est normal.

On utilise pour la commutation optique les deux textures d'azimut constant définies par les états $P_{19}O_{18}$ et $O_{19}P_{18}$.

La disposition précitée des électrodes 18, 19 est définie en partant de la situation symétrique où les directions d'évaporation sont coplanaires et les électrodes se font face comme représenté sur la figure 4. On tourne ensuite une électrode (par exemple l'électrode 19) de $\phi_0$=45° de façon que les azimuts des directions $O_{19}$ et $P_{18}$ coïncident, ainsi que celles de $P_{19}O_{18}$. La direction $O_{19}P_{18}$ est donc aussi tourné de 45° par rapport à $O_{18}P_{19}$. En plus de ces deux textures d'azimut constant, il existe bien sûr d'autres textures d'azimut variable, donc tordues, par exemple $O_{19}P_{18}$, $P_{19}P_{18}$, etc ... La disposition choisie est celle pour laquelle ces autres textures ont l'énergie de distortion la plus grande, impliquant à la fois changement d'azimut φ et d'angle zenithal θ. Ces grandes énergies de distortion rendent ces textures instables. Il existe tout de même une texture de torsion simple $\phi_0$ entre les états $P_{19}$ et $P_{18}$. Pour monter l'énergie de cet état, on peut doper le nématique avec un cholestérique de façon que sur l'épaisseur d de la cellule, le nématique dopé cholestérique tourne spontanément en sens opposé d'un angle - $\phi_0/2$≃20°. Ceci augmente beaucoup l'énergie de torsion de la texture $P_{19}P_{18}$, sans pour autant trop diminuer l'énergie des textures non voulues de type $O_{19}O_{18}$, etc ... La torsion - $\phi_0/2$=20° est obtenue en fixant la concentration d'un dopant cholestérique. On a utilisé la molécule cholestérique C15 de Merck. Pour ce corps, à température ambiante, le produit : pas cholestérique x concentration dans le 5CB vaut 2μm. Pour obtenir 20° sur l'épaisseur d, il faut un pas cholestérique ≃ 18d, ce qui fixe la concentration.

En conclusion, on a réalisé ainsi deux textures en volume d'azimut constant, tournées l'une par rapport à l'autre de 45°, en éliminant toutes les autres, d'énergie de courbure trop forte. Ces deux états ont des polarisations flexoélectriques $\mathbf{P}=e[\mathbf{n}(div\mathbf{n})+rot\mathbf{n}\times\mathbf{n}]$ (e constante flexo ≃ $10^{-4}$ cgs) spontanées dont les composantes normales aux électrodes sont de sens opposés. Les polarisaions flexoélectriques sont donc opposées par rapport à la direction du champ électrique appliqué comme représenté sur les figures 6A et 6B. Cette propriété polaire va servir à la commutation électrique entre les deux états.

c) Montage optique

Les deux textures $O_{19}P_{18}$ et $P_{19}O_{18}$ sont placées entre analyseurs et polariseurs croisés. La texture $O_{18}P_{19}$ est parallèle une des directions de l'analyseur ou du polariseur, et correspond à un état éteint (noir), en transmission. L'autre texture $P_{18}O_{19}$ est orientée à 45°. Elle rétablit la lumière si la biréfringence résultante correspond à un retard optique d'un multiple de λ/2 (λ≃0,5μm est la longueur d'onde optique).

Avec un angle zenithal θ surface compris entre 90° (pour P) et 75° (pour O), la biréfringence moyenne, correspondant à l'angle moyen θ mm ≃ (90+75)/2 ≃ 82°, vaut :

Δn= Δn0 $sin^2$ θm≃0,19 avec Δn0≃0,2. L'épaisseur $d_0$ optimale définie par :

d Δn = λ/2, donne :

$$d_0 - (0,25/0,19) = 1,3 \ \mu m.$$

En pratique, dans l'expérience conduite par les inventeurs, d est fixé à 1μm par des cales de parylène C de la Société Comelec. Les deux électrodes ITO sont serrées dans un porte échantillon, pour bien appuyer sur les cales.

II - DESCRIPTION DU FONCTIONNEMENT

a) Observation optique

On observe le pixel ainsi réalisé sous un microscope polarisant Leitz, dont les polariseurs sont disposés comme indiqué ci-dessus en Ic. La lumière transmise est observée aussi par un photomultiplicateur et enregistrée sur un oscilloscope à mémoire.

Les deux électrodes sont connectées à un générateur d'impulsion rectangulaire, de durée τ(1μs<τ<1ms) et d'amplitude constante V (-200< V<+200volt). La masse est connectée à l'électrode 18. En l'absence d'excitation électrique, on observe au hasard un (ou les deux) état $O_{19}P_{18}$ ou $P_{19}O_{18}$. Une impulsion positive est appliquée, de durée τ = 100μs. Au-dessus d'un seuil de V = +14volt on fait apparaître après l'impulsion un état unique $O_{19}P_{18}$ clair. Une autre impulsion positive ne change pas l'état. On applique alors une impulsion négative V=-14volt, qui fait basculer l'état $O_{19}P_{18}$ vers l'état $P_{19}O_{18}$ noir. Une autre impulsion négative ne change pas ce nouvel état. En l'absence d'impulsion les deux textures quasi uniformes claire ou noire du pixel sont stables pendant plusieurs heures.

b) Dynamique de la commutation

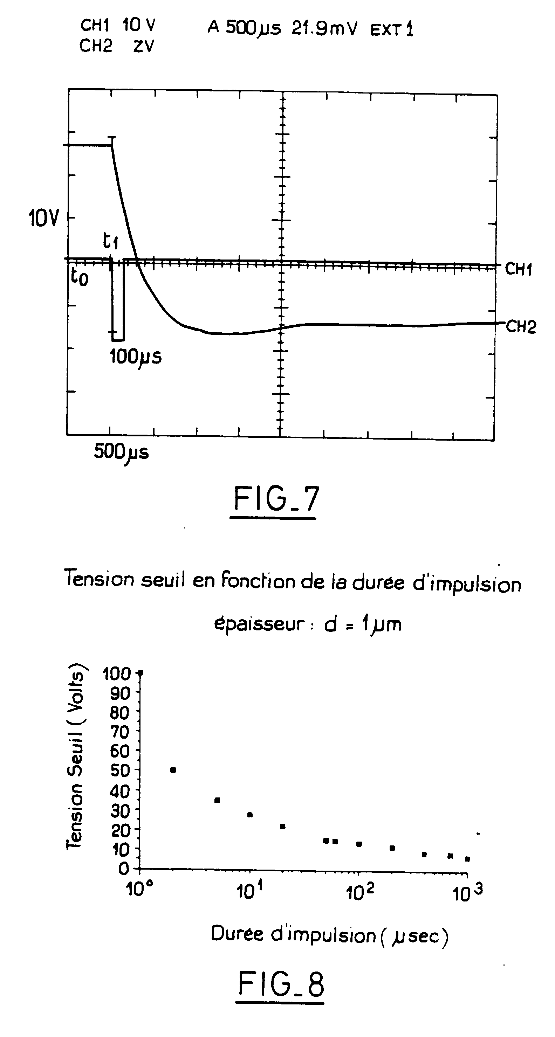

La figure 7 montre un enregistrement typique de la lumière transmise par la cellule. A l'origine t0 de l'enregistrement, la cellule est dans l'état $O_{19}P_{18}$ qui transmet la lumière. On applique à t1 une impulsion de -18volt de durée $\tau$. La lumière commence à baisser au début de l'impulsion et continue ensuite pendant t = 1ms, pour donner finalement l'état noir $O_{18}P_{19}$. t est le temps caractéristique bien connu d'orientation de la courbure en volume, en l'absence de champ électrique. t est défini par : $t^{-1} = K/d^2\eta$ où K est la constante de courbure du nématique ($K \simeq 10^{-6}$cgs) et $\eta$ la viscosité ($\eta \simeq 0.1$cgs). t varie comme le carré de l'épaisseur d.

Les inventeurs ont mesuré le seuil de basculement $V(\tau)$. On obtient la courbure de la figure 8. Pour $\tau$ infini ($\tau \simeq 1$ms), V sature vers ± 7,5volt. Pour $\tau$ plus court, il faut augmenter V. On trouve par exemple pour $\tau$=64µs (le temps d'accès d'une ligne, pour une image vidéo à 625 lignes) V=15volt. Pour une cadence à 1000 lignes, on a $\tau$ =40µs et V=16volt. On peut obtenir $\tau$=1µs pour V=100volt. Ces seuils sont les mêmes pour les deux commutations entre les deux états clair-noir et noir-clair.

c) Modélisation

Les inventeurs ont mesuré le champ de seuil $V(\tau)$/d pour différentes épaisseurs d entre 1 et 4µm.

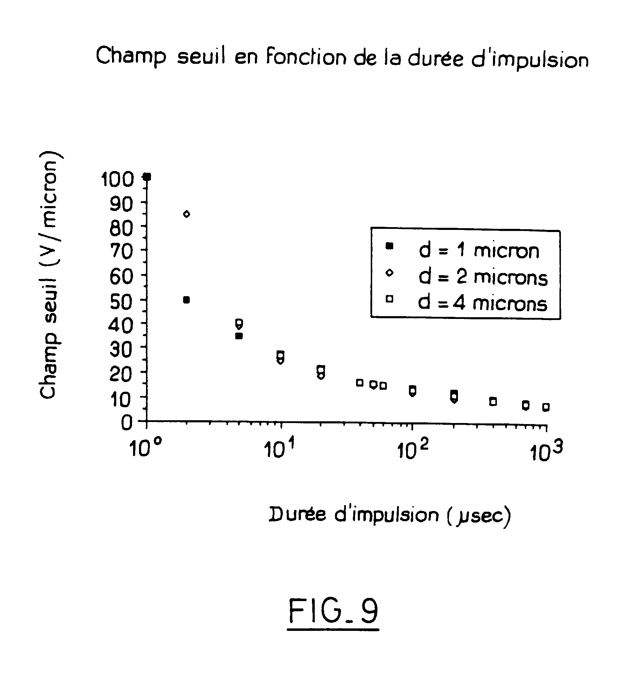

La courbe obtenue est représentée sur la figure 9.

Pour $\tau$ grand (>100µs), le seuil V/d est constant indiquant qu'on observe un effet de champ électrique. Aux temps courts ($\tau$<20µs), on observe une augmentation du champ de commutation, lui-même proportionnel à l'épaisseur.

Le mécanisme de commutation est le suivant : l'effet de champ à grand $\tau$ correspond à la cassure de l'orientation de surface. Le champ E tend à aligner le nématique normal aux électrodes (orientation homéotrope) en raison de l'anisotropie électrique positive du cristal. Par symétrie, cet état est un extrêmum de l'énergie de surface. En définissant la barrière d'énergie de surface entre les deux états par la longueur d'extrapolation L (0,1µm<L<1µm), ce champ critique est obtenu quand le couple diélectrique appliqué à la surface compense juste le couple de rappel de l'orientation de surface.

Ceci donne la relation :

(1)

$$\frac{K}{L}\theta = \left(\frac{\varepsilon_a}{4\pi} E^2\right)\theta \xi$$

où $\xi$ est la longueur de cohérence électrique définie par :

$$(2)\quad \frac{K}{\xi^2} = \frac{\varepsilon_a}{4\pi} E^2 \text{ , c.a.d.}$$

$$\xi = \left(\frac{4\pi K}{\varepsilon_a}\right)^{1/2} \frac{1}{E}$$

On obtient finalement $\xi$ =L. Avec V=7,5volt, on trouve L=($10^{-3}$/E)=5 $10^{-6}$cm $\simeq$ 500Å, ce qui correspond a un ancrage très fort.

A la fin de l'impulsion, la texture homéotrope va redonner au hasard une des deux textures $O_{19}P_{18}$ ou $O_{18}P_{19}$. La dégénérescence est levée par le couplage flexoélectrique entre les textures et le champ dépolarisant des ions bloqués à la surface.

Prenons par exemple pour l'explication le cas d'une impulsion négative qui fait commuter de $O_{19}P_{18}$ vers $O_{18}P_{19}$. Juste après l'impulsion, si on enlève les charges qui déterminaient la tension appliquée V des électrodes, il reste près de l'électrode haute 19 des ions positifs et près de l'électrode basse 18 des ions négatifs, qui appliquent un champ électrique dépolarisant et transitoire $E_d$ de 19 vers 18. Ce champ favorise la création de l'état $P_{19}O_{18}$ qui a une polarisation flexoélectrique $P_z$ dirigée aussi de 19 vers 18 avec donc une énergie - $P_zE_d$ favorable. L'état $P_{18}O_{19}$ a une énergie + $P_zE_d$ défavorable.

Après le temps de relaxation des charges, le champ $E_d$ disparait et l'état $P_{19}O_{18}$ est stable, quoique ayant la même énergie que l'état $P_{18}O_{19}$, car le système ne peut pas franchir seul la forte barrière d'ancrage de surface.

Aux temps courts, il faut augmenter V plus vite que l'épaisseur, car une autre contrainte apparaît : les ions doivent avoir le temps d'être transportés pendant l'impulsion $\tau$ d'une électrode à l'autre.

En appelant µ ($\mu \simeq 10^3 \mu$m²/Vsec) la mobilité des ions, leur vitesse v est v = µE. Pour parcourir d = 1µm, avec V = 7,5volt, il faut un temps $\tau'$=d/v=$d^2$/µV$\simeq$130µs. En prenant comme seule limite cette condition de transport, on trouve V/d = E$\simeq$d/µ$\tau'$ qui est bien proportionnel à d comme trouvé expérimentalement.

Si les deux textures $O_{19}P_{18}$ entre lesquelles se fait la commutation avaient exactement la même énergie, un champ dépolarisant infiniment faible suffirait à assurer la commutation. En fait, les deux textures ne sont pas exactement symétriques et présentent une différence d'énergie $\Delta W$. Le champ dépolarisant $E_d$ minimum nécessaire est alors celui qui donne une énergie de couplage flexoélectrique $\int -E_dPd^3r$ supérieure à I$\Delta$ WI. En pratique, on ne connait pas $\Delta W$. $E_d$ est ajusté en dopant le nématique avec des ions. Pour 5CB, nous avons mesuré une résistance R de l'échantillon de section S = 1cm² et d = 1µm de R = 1 à 10MΩ, suivant la pureté initiale du produit. Pour augmenter les charges de surface et le champ dépolarisant, nous avons dopé le 5CB avec du TPBTBA (tétraphényl borate de tétrabutyle ammonium) pour obtenir une concentration relative molaire finale en ions de $10^{-3}$ à $10^{-5}$. Nous obtenons l'effet bistable dans une gamme de résistance d'échantillon R = 25k Ω à 1M Ω. En pratique, la conductivité initiale des échantillons les moins résistants suffit à assurer l'effet pour les états de surface que nous avons utilisés.

L'afficheur bistable ainsi formé sur un pixel peut être utilisé dans des écrans matriciels multiplexés. Le temps de surface définit alors le temps d'accès des lignes, et le temps de volume celui des images. Sans contrainte temporelle, la bistabilité permet bien sûr un multiplexage infini. Avec contrainte temporelle, on peut transmettre un nombre maximum 1/τv de 1000 images/sec. Le nombre de lignes de ces images est défini par la tension utilisée : 16volt pour 1000 lignes à la cadence vidéo par exemple (et 15 volt pour 625 lignes). Ce système est donc bien adapté à l'affichage vidéo à haute résolution.

## VARIANTE DE MISE EN OEUVRE DES SIGNAUX DE COMMANDE

### 1. Rappel sur le mode de réalisation décrit précédemment

On a décrit précédemment un procédé de commande de l'afficheur consistant à appliquer sur le dispositif une impulsion électrique carrée d'amplitude V (1 Volt < V < 100 Volts) et de durée τ (1 μs< τ ). Cette impulsion oriente les molécules en volume normalement aux électrodes (orientation homéotrope) et casse aussi l'orientation de surface sur les électrodes.

A la fin de l'impulsion, le système peut retourner sur l'une de deux textures stables correspondant à des polarisations flexoélectriques différentes. Les deux textures stables seront appelées A ou B par la suite. En fait, le système ne revient pas au hasard. La texture finale choisie dépend de la polarité de l'impulsion appliquée.

Si le système est dans l'état A, une impulsion positive par exemple, de tension IVI > $V_s$ (τ) va le faire passer dans l'état B.

L'application d'une autre tension identique de même polarité laisse le système dans l'état B.

L'application d'une impulsion négative -V (IVI > $V_s$ (τ)) rebascule le système dans l'état A. $V_s$(τ) est une tension seuil, dépendant de τ.

La polarité de l'effet s'explique par le couplage entre la polarisation flexoélectrique des états A et B et le champ résiduel dans la cellule quand on a juste coupé l'impulsion.

Si l'on enlève les charges des électrodes, ce champ résiduel est le champ dépolarisant créé par les ions présents dans la cellule, après dopage ou non du nématique.

En pratique, on annule brutalement la tension aux bornes de la cellule. Il reste alors des charges hors d'équilibre non seulement près des électrodes (les ions), mais aussi sur les électrodes. La distribution de champ dans la cellule est plus complexe, mais le signe de tous les champs et de toutes les charges résiduelles est strictement lié au signe de l'impulsion électrique V appliquée.

Le couplage flexoélectrique global du champ résiduel dû aux ions hors d'équilibre près des électrodes et des polarisations flexoélectriques du nématique (et plus généralement des gradients de champ dépolarisant et des moments quadrupolaires électriques du nématique) favorise toujours le retour du système vers celui des états A ou B dont l'énergie en régime transitoire est la plus basse, compte tenu du signe de l'impulsion de commande.

### 2. Objet de la variante

Les perfectionnements apportés par la présente variante concernent la phase transitoire de retour à l'équilibre où, après cassure de l'orientation de surface, le système a le choix de retourner vers l'un des deux états A ou B.

Il peut paraître délicat, en pratique, de dépendre de la concentration des ions dans la cellule pour assurer la commutation vers celui des deux états A ou B désiré.

Pour mieux contrôler ce retour, indépendamment des ions présents dans la cellule, les inventeurs proposent, comme indiqué précédemment, d'appliquer successivement au dispositif : 1) au moins une impulsion de commande apte à induire une orientation généralement homéotrope homogène du cristal liquide, puis 2) une impulsion de contrôle, d'amplitude plus faible que l'impulsion de commande, et de polarité choisie selon l'état final requis.

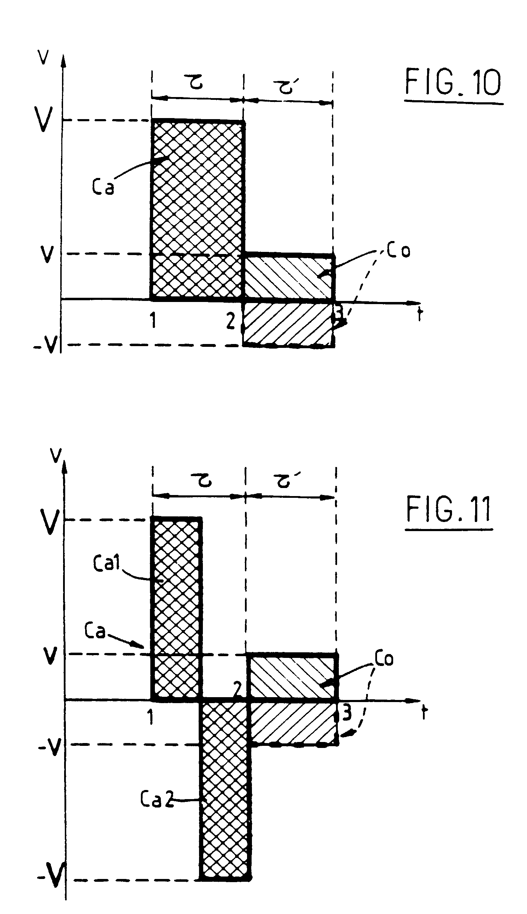

Un exemple de tels signaux successifs de commande et de contrôle est représenté sur la figure 10 annexée.

On aperçoit sur cette figure 10, une impulsion de commande carré Ca de tension V (IVI > $V_s$ (τ) comme décrit précédemment appliquée au temps 1.

L'impulsion de commande Ca se termine au temps 2. Elle dure le temps τ.

Selon la présente variante, l'impulsion de commande Ca est maintenant suivie d'une deuxième impulsion Co, dite de contrôle, d'amplitude ±v avec 0,1 Volt ≤ IvI < $V_s$ (τ).

Typiquement, IvI est de l'ordre de +5 Volts.

L'impulsion de contrôle Co est maintenue entre les temps 2 et 3, c'est-à-dire pendant un temps τ' avec 10 μs < τ' < ∞ typiquement τ' est compris entre 25 μs et 50μs.

L'impulsion de contrôle Co permet de contrôler la polarité du champ dans la cellule entre les instants 2 et 3 où le système va commuter de l'orientation homéotrope homogène obtenue par l'impulsion de commande Ca d'amplitude V à l'instant 2, vers l'un des états A ou B de polarité définie.

En utilisant une excitation à deux impulsions successives, respectivement de commande Ca et de contrôle Co, comme indiqué sur la figure 10, on constate les effets suivants.

Supposons le système dans l'état A, tel que l'application d'une impulsion de commande Ca positive d'amplitude V le fasse passer en B, en l'absence d'impulsion de contrôle v, comme indiqué précédemment.

L'application d'une impulsion de contrôle Co d'amplitude v > 0 avec v > $v_s$ ($\tau'$) ($v_s$ (50 µs) = 3 Volts) inhibe le basculement de A vers B. Le système reste dans A.

Inversement, l'application d'une impulsion de contrôle Co négative -v (quelle que soit son amplitude), favorise toujours le basculement de A vers B.

De façon symétrique, pour une impulsion de contrôle Co nulle v = 0, il faut appliquer une tension de commande V <0 pour commuter de B vers A. Une tension de contrôle Co positive v < 0 favorise toujours le basculement de B vers A, quelle que soit son amplitude. Par contre, une tension de contrôle Co négative -v<0 (IvI > $v_s$ ($\tau'$) comme précédemment) empêche le basculement de B vers A.

Finalement, l'état obtenu après retour à l'équilibre ne dépend que de la polarité de l'impulsion de contrôle Co si l'amplitude v de cette impulsion de contrôle Co est choisie au-dessus du seuil Iv$_s$I ~ 3 Volts, et ne dépend pas de la polarité de l'impulsion de commande Ca.

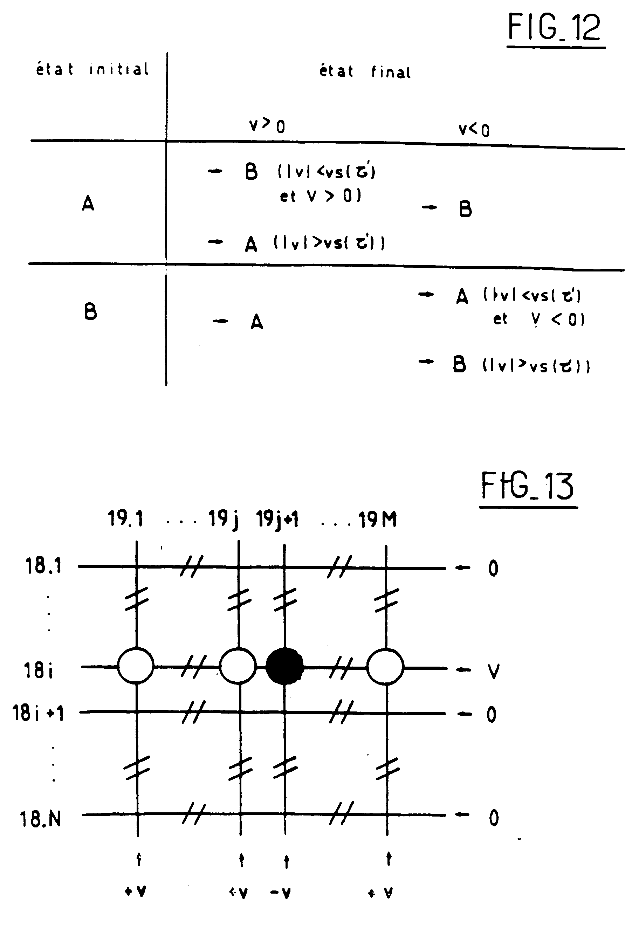

Les moyens proposés par la présente invention permettent donc de séparer les fonctions : l'impulsion de commande Ca d'amplitude V casse l'orientation de surface, et l'impulsion de contrôle Co, d'amplitude v (IvI > $v_s$ ($\tau'$)) contrôle par son signe la polarité de l'état final A ou B. Le seuil $v_s$ ($\tau'$) de l'impulsion de contrôle Co correspond à la compensation par cette impulsion v de la polarité contrôlée par les ions. Ce seuil $v_s$ baisse en prenant un cristal liquide moins conducteur. v > $v_s$ ( T') veut dire que l'impulsion de contrôle a un effet supérieur à l'effet du champ dépolarisant des ions. La table de commutation obtenue est donnée sur la figure 12 où les états utiles (IvI > $v_s$ ($\tau'$)) sont indiqués en gras, et où on a supposé IVI > $V_s$ ($\tau$).

On constate sur le tableau de la figure 12 que si l'on choisit une impulsion de contrôle Co d'amplitude supérieure au seuil (soit IvI > $v_s$ ($\tau'$)), ce qui correspond aux états en caractères gras, l'état final ne dépend que du signe de l'impulsion de contrôle Co.

Les états "maigres" illustrés sur le tableau de la figure 12 correspondent au fonctionnement décrit précédemment en regard des figures 1 à 9.

## APPLICATION AU MULTIPLEXAGE D'UN AFFICHEUR NEMATIQUE BISTABLE

Les moyens précités permettent un contrôle simple de l'afficheur, par multiplexage.

Supposons comme représenté schématiquement sur la figure 13, un afficheur matriciel comprenant N électrodes de ligne référencées 18-1 à 18-N sur une première plaque et M électrodes de colonne référencées 19-1 à 19-M sur la seconde plaque.

Chaque pixel défini par l'intersection d'une électrode de ligne et d'une électrode de colonne est identifié par ses coordonnées i, j. Le procédé de multiplexage conforme à la présente invention est le suivant.

On ouvre successivement chaque ligne 18-1 à 18-N, par exemple la ligne i, en l'excitant par une tension de commande Ca d'amplitude V(IVI > $V_s$ ($\tau$)) de polarité arbitraire. L'impulsion de commande Ca est appliquée sur la ligne i, selon l'illustration schématique de la figure 13, les autres lignes ne reçoivent pas de signal (V = 0). A la fin de l'excitation par l'impulsion de commande V, toute la ligne i est effacée, les molécules du cristal liquide prennent une orientation homéotrope.

On envoie ensuite en parallèle des impulsions de contrôle Co d'amplitude ± IvI (v > $v_s$ ($\tau'$)) sur toutes les colonnes M simultanément, suivant l'état désiré des différents pixels i, j (1 ≤ j ≤ M) de la ligne i. Les impulsions de contrôle Co d'amplitude ± v sont appliquées juste à la fin de l'impulsion de commande Ca d'amplitude V. Les pixels i, j (1 ≤ j ≤ M) de cette ligne sont alors placés dans les états A ou B, suivant le signe de la petite impulsion de contrôle v. Les autres lignes, non ouvertes (V = 0) sont insensibles à l'impulsion de contrôle Co et conservent leurs états A ou B. Pour plus de commodité, on pourra commencer l'application de l'impulsion de contrôle Co avant la fin de l'impulsion de commande Ca. L'important est que l'impulsion de contrôle Co persiste 10 à 50 µs après la fin de l'impulsion de commande Ca.

Après la ligne i, on ouvrira successivement les lignes i + 1, i + 2, etc, qui seront effacées et réinscrites, pour tracer la nouvelle image. Chaque ligne est donc successivement effacée, par une impulsion de commande Ca d'amplitude V pendant le temps $\tau$ , et réinscrite par une impulsion de contrôle Co d'amplitude v pendant le temps $\tau'$ qui succède à $\tau$. Le temps total pour effacer et inscrire une ligne est donc, selon le procédé précité : $\tau + \tau'$, ajustable en variant l'impulsion de commande Ca et l'impulsion de contrôle Co. Le temps total pour effacer et inscrire une image complète est alors N ($\tau + \tau'$).

Cependant, on peut avantageusement ouvrir la ligne i + 1 avec une impulsion de commande Ca, pendant le temps $\tau'$ d'inscription de la ligne précédente i avec des impulsions de contrôle Co. Le temps total d'inscription d'une image complète est alors seulement N x $\tau$ au lieu de N($\tau + \tau'$).

Pour éviter des effets électrochimiques, on peut alterner le signe de l'impulsion de commande V d'une image à l'autre, ou même, remplacer l'impulsion de commande Ca d'amplitude V continue par une impulsion de commande Ca d'amplitude V haute fréquence. Une telle impulsion de commande haute fréquence est représentée schématiquement sous forme de deux impulsions successives Ca1, Ca2 de polarités opposées, sur la figure 11. Dans le cas d'une excitation haute fréquence, le seuil $v_s$ de l'impulsion de contrôle Co est nul puisqu'il n'y a plus de mémoire polaire des ions. L'amplitude v de l'impulsion de contrôle Co pourra être diminuée. La polarité absolue des états A et B dépend du signe de la constante flexoélectrique du nématique et des angles d'obliquité d'orientation sur chaque électrode. Elle n'a aucune importance dans le fonctionnement de l'afficheur, puisqu'il suffit de changer le signe de l'impulsion de contrôle Co pour favoriser un état ou l'autre.

En conclusion, le système d'afficheur nématique bistable, à bistabilité de surface contrôlé flexoélectriquement, peut être multiplexé très simplement grâce aux moyens proposés par la présente variante.

Pour cela, on excite séquentiellement chaque électrode de ligne par une impulsion de commande continue Ca d'amplitude V comprise entre 1 et 100 Volts, typiquement 10 et 20 Volts de durée supérieure à 1 µs, typiquement comprise entre 20 et 50 µs, de signe arbitraire, ou même haute fréquence, qui casse l'orientation de surface et efface la ligne.

On applique juste après l'impulsion de commande Ca, une impulsion de contrôle Co d'une amplitude v comprise entre 0,1 et 10 Volts, typiquement de l'ordre de 5 Volts de durée supérieure à 10 µs, typiquement comprise entre 25 et 50 µs, en parallèle sur toutes les colonnes. Si l'amplitude v de l'impulsion de contrôle Co est supérieure au seuil requis (soit $|v| > v_s$ ($\tau'$) de l'ordre de 3 Volts), l'état final des pixels ne dépend que de la polarité de l'impulsion de contrôle Co.

Le seuil d'amplitude $v_s$ de l'impulsion de contrôle Co est nul pour une excitation de commande haute fréquence. En pratique, on peut alors prendre une impulsion de contrôle Co ayant une amplitude de l'ordre de 0,1 Volt.

L'excitation séquentielle des lignes est poursuivie pour balayer toute l'image.

Ce procédé de multiplexage conforme à la présente invention est beaucoup plus simple que ceux proposés précédemment pour le multiplexage des smectiques ferroélectriques smectiques C*. Pour ces derniers, en effet, on utilise généralement, outre une impulsion d'effacement, une double impulsion d'écriture, toutes ces impulsions (4 par exemple), étant à forte tension. Le procédé conforme à la présente invention, n'utilise qu'une "forte" tension V de commande, et une faible tension ± v de contrôle.

On notera que le dispositif conforme à la présente invention, ne pose aucun problème de stabilité électrochimique dans la mesure où les dopants cholestériques éventuellement utilisés sont électrochimiquement stables.

Bien entendu la présente invention n'est pas limitée aux modes de réalisation particuliers qui viennent d'être décrits mais s'étend à toutes variantes conformes aux revendications.

## Revendications

1. Dispositif optique à cristaux liquides du type comprenant deux plaques transparentes (12, 14) pourvues d'électrodes de commande (18, 19) et entre lesquelles est placé un matériau cristal liquide (20) et dans lequel il est prévu des moyens d'alimentation électrique (30) aptes à appliquer au dispositif des tensions générant un champ électrique perpendiculaire aux plaques (12, 14), orienté sélectivement dans un sens ou dans l'autre, caractérisé par le fait que ; pour générer un effet bistable correspondant à deux configurations alternatives stables en l'abscence de champ

   - les plaques transparentes (12, 14) présentent un traitement de surface apte à définir deux configurations stables en l'absence de champ de molécules de matériau cristal liquide générant respectivement deux polarisations flexoélectriques ayant des composantes normales aux électrodes $P_z1$ $P_z2$ de sens opposés,
   - le matériau cristal liquide est un cristal liquide nématique, et
   - les moyens d'alimentation électrique (30) sont adaptés pour générer des impulsions aptes à commuter le cristal liquide entre ses deux configurations stables.

2. Dispositif selon la revendication 1, caractérisé par le fait que le cristal liquide nématique (20) présente une anisotropie diélectrique positive.

3. Dispositif selon l'une des revendications 1 et 2, caractérisé par le fait que le cristal liquide nématique (20) présente une anisotropie diélectrique positive de l'ordre de 10.

4. Dispositif selon l'une des revendications 1 à 3, caractérisé par le fait que les deux configurations stables de molécules du matériau cristal liquide correspondent à des textures de cristal liquide d'azimut constant pour une configuration donnée, décalées en azimut d'une configuration à l'autre.

5. Dispositif selon la revendication 4, caractérisé par le fait que les deux configurations stables de molécules du matériau cristal liquide correspondent à des textures d'azimut constant pour une configuration donnée, décalées de 45° entre elles.

6. Dispositif selon l'une des revendications I à 5, caractérisé par le fait que les deux configurations stables de molécules du matériau cristal liquide présentent des orientations zénithales différentes.

7. Dispositif selon l'une des revendications I à 6, caractérisé par le fait que les deux configurations stables de molécules du matériau cristal liquide correspondent l'une à une orientation planaire sur une première plaque (12) et oblique sur une seconde plaque (14), l'autre à une orientation oblique sur la première plaque (12) et planaire sur la seconde plaque (14).

8. Dispositif selon l'une des revendications 1 à 7, caractérisé par le fait que la cellule à cristal liquide comprenant les deux plaques transparentes (12, 14) est placée entre un polariseur et un anayseur croisés.

9. Dispositif selon l'une des revendications 1 à 8, caractérisé par le fait que le matériau cristal liquide (20) est dopé par des ions non chiraux.

10. Dispositif selon l'une des revendications 1 à 9, caractérisé par le fait que la concentration relative molaire en ions est de l'ordre de $10^{-3}$ à $10^{-5}$.

11. Dispositif selon l'une des revendications 1 à 10, caractérisé par le fait que les deux configurations stables sont obtenues par différents frottements inclinés entre eux réalisés sur la surface interne des plaques (12, 14), par exemple deux frottements à 45° d'un polymère déposé sur les plaques (12, 14).

12. Dispositif selon l'une des revendications 1 à 10, caractérisé par le fait que les deux configurations stables sont obtenues par contrôle de l'épaisseur et de la longueur d'onde moyenne de la rugosité sur la surface interne des plaques (12, 14).

13. Dispositif selon la revendication 12, caractérisé par le fait que les configurations sont obtenues par évaporation contrôlée sur les plaques (12, 14).

14. Dispositif selon l'une des revendications 12 ou 13, caractérisé par le fait que les configurations sont contrôlées par évaporation de SiO sous un angle de l'ordre de 74° avec une épaisseur moyenne de l'ordre de 30Å.

15. Dispositif selon l'une des revendications 12 à 14, caractérisé par le fait que les directions d'évaporation sur les deux plaques (12, 14) sont inclinées relativement de l'ordre de 45° en azimut.

16. Dispositif selon l'une des revendications 1 à 15, caractérisé par le fait que le matériau cristal liquide est dopé par un cholestérique.

17. Dispositif selon les revendications 15 et 16 prises en combinaison, caractérisé par le fait que le choléstérique définit une rotation spontanée du matériau cristal liquide nématique dans un sens inverse du décalage formé entre les deux directions d'évaporation sur les deux plaques respectives et d'amplitude de l'ordre de la moitié du décalage azimutal entre les deux directions d'évaporation.

18. Dispositif selon l'une des revendications 1 à 17, caractérisé par le fait que l'épaisseur de la cellule est de l'ordre de 1,3μ.

19. Dispositif selon l'une des revendications 1 à 18, caractérisé par le fait que les moyens d'alimentation électriques (30) sont conçus pour appliquer des impulsions de commande d'une durée comprise entre I et 1000μs.

20. Dispositif selon l'une des revendications 1 à 19, caractérisé par le fait que les moyens d'alimentation électrique (30) sont conçus pour appliquer des impulsions de commande d'une amplitude comprise entre 1 et 100volt.

21. Dispositif selon l'une des revendications 1 à 18, caractérisé par le fait que les moyens d'alimentation électrique sont conçus pour appliquer successivement au dispositif :

   - au moins une impulsion de commande (Ca) apte à induire une orientation généralement homéotrope homogène du cristal liquide, puis
   - une impulsion de contrôle (Co), d'amplitude plus faible que l'impulsion de commande, et de polarité choisie selon l'état final requis.

22. Dispositif selon la revendication 21, dans lequel les électrodes de commande sont agencées en N lignes (18-1 à 18-N) et M colonnes (19-1 à 19-M) définissant une matrice de NM pixels à leurs intersections, caractérisé par le fait que les impulsions de commande (Ca) sont appliquées successivement sur les N électrodes de ligne, tandis qu'à la fin de chaque impulsion de commande, des impulsions de contrôle (Co) de polarité respectivement choisie sont appliquées simultanément sur l'ensemble des M électrodes de colonne.

23. Dispositif optique selon la revendication 21 ou 22, caractérisé par le fait que l'impulsion de commande (Ca) est une impulsion carré unique.

24. Dispositif optique selon la revendication 21 ou 22, caractérisé par le fait que l'impulsion de commande (Ca) comprend des impulsions carré successives de polarités opposées (Ca1, Ca2).

25. Dispositif optique selon la revendication 21 ou 22, caractérisé par le fait que l'impulsion de commande (Ca) comprend une série d'impulsions haute fréquence.

26. Dispositif optique selon l'une des revendications 21 à 25, caractérisé par le fait que l'amplitude des impulsions de commande (Ca) est comprise entre I et 100 Volts, typiquement entre 10 et 20 Volts.

27. Dispositif optique selon l'une des revendications 21 à 26, caractérisé par le fait que la durée des impulsions de commande (Ca) est supérieure à 1μs, typiquement comprise entre 20 et 50 μs.

28. Dispositif optique selon l'une des revendications 21 à 27, caractérisé par le fait que l'amplitude des impulsions de contrôle (Co) est comprise entre 0,1 et 10 Volts, typiquement entre 0,1 et 5 Volts.

29. Dispositif optique selon l'une des revendications 21 à 28, caractérisé par le fait que la durée des impulsions de contrôle (Co) est supérieure à 10 μs, typiquement comprise entre 25 et 50 μs.

30. Dispositif optique selon l'une des revendications 21 à 29, caractérisé par le fait que le début des impulsions de contrôle (Co) coïncide avec la fin des impulsions de commande (Ca).

31. Dispositif optique selon l'une des revendications 21 à 29, caractérisé par le fait que le début des impulsions de contrôle (Co) précède la fin des impulsions de commande (Ca).

32. Dispositif optique selon la revendication 30 ou 31, caractérisé par le fait que les impulsions de contrôle (Co) persistent après la fin des impulsions de commande (Ca) pendant au moins 10 μs à 50 μs.

33. Dispositif optique selon l'une des revendications 21 à 32 prises en combinaison avec la revendication 22, caractérisé par le fait que le début de l'impulsion de commande (Ca) sur l'électrode de ligne i + l coïncide sensiblement avec la fin de l'impulsion de commande (Ca) sur l'électrode de ligne i.

**Patentansprüche**

1. Optische Flüssigkristall-Vorrichtung des Typs, der zwei transparente Platten (12, 14) aufweist, die mit Steuerelektroden (18, 19) ausgestattet sind und zwischen denen ein Flüssigkristallmaterial (20) angeordnet ist und in der Mittel zur Zuführung von elektrischer Energie (30) vorgesehen sind, mit deren Hilfe Spannungen an die Vorrichtung angelegt werden können, die ein elektrisches Feld senkrecht zu den Platten (12, 14) erzeugen, das selektiv in einer Richtung oder in der anderen Richtung ausgerichtet ist,
dadurch gekennzeichnet, daß zur Erzeugung eines bistabilen Effekts, der zwei stabilen alternativen Konfigurationen entspricht, in Abwesenheit eines Feldes,

- die transparenten Platten (12, 14) eine Oberflächen-Formgebung aufweisen, die geeignet ist, um in Abwesenheit eines Feldes zwei stabile Konfigurationen der Moleküle des Flüssigkristallmaterials zu definieren, die jeweils zwei flexoelektrische Polymerisationen ergeben, die Komponenten senkrecht zu den Elektroden $P_z1$ $P_z2$ in entgegengesetztem Sinne aufweisen,

- das Flüssigkristallmaterial ein nematischer Flüssigkristall ist und

- die Mittel zur Zuführung von elektrischer Energie (30) geeignet sind zur Erzeugung von Impulsen, mit deren Hilfe der Flüssigkristall zwischen seinen beiden stabilen Konfigurationen umgeschaltet werden kann.

2. Vorrichtung nach Anspruch 1, dadurch gekennzeichnet, daß der nematische Flüssigkristall (20) eine positive dielektrische Anisotropie aufweist.

3. Vorrichtung nach einem der Ansprüche 1 und 2, dadurch gekennzeichnet, daß der nematische Flüssigkristall (20) eine positive dielektrische Anisotropie in der Größenordnung von 10 aufweist.

4. Vorrichtung nach einem der Ansprüche 1 bis 3, dadurch gekennzeichnet, daß die beiden stabilen Konfigurationen der Moleküle des Flüssigkristallmaterials Flüssigkristall-Strukturen mit einem für eine gegebene Konfiguration konstanten Azimut entsprechen, die von einer Konfiguration zur anderen in bezug auf den Azimut verschoben sind.

5. Vorrichtung nach Anspruch 4, dadurch gekennzeichnet, daß die beiden stabilen Konfigurationen der Moleküle des Flüssigkristallmaterials Strukturen mit einem für eine gegebene Konfiguration konstanten Azimut entsprechen, die um 45° gegeneinander verschoben (versetzt) sind.

6. Vorrichtung nach einem der Ansprüche 1 bis 5, dadurch gekennzeichnet, daß die beiden stabilen Konfigurationen der Moleküle des Flüssigkristallmaterials unterschiedliche Zenital-Orientierungen aufweisen.

7. Vorrichtung nach einem der Ansprüche 1 bis 6, dadurch gekennzeichnet, daß die beiden stabilen Konfigurationen der Moleküle des Flüssigkristallmaterials einerseits einer ebenen Orientierung auf einer ersten Platte (12) und einer schrägen Orientierung auf einer zweiten Platte (14) und andererseits einer schrägen Orientierung auf der ersten Platte (12) und einer ebenen Orientierung auf der zweiten Platte (14) entsprechen.

8. Vorrichtung nach einem der Ansprüche 1 bis 7, dadurch gekennzeichnet, daß die Flüssigkristall-Zelle, welche die beiden transparenten Platten (12, 14) aufweist, zwischen einem Polarisator und einem Analysator, die gekreuzt sind, angeordnet ist.

9. Vorrichtung nach einem der Ansprüche 1 bis 8, dadurch gekennzeichnet, daß das Flüssigkristallmaterial (20) mit nicht-chiralen Ionen dotiert ist.

10. Vorrichtung nach einem der Ansprüche 1 bis 9, dadurch gekennzeichnet, daß die relative molare Ionen-Konzentration in der Größenordnung von $10^{-3}$ bis $10^{-5}$ liegt.

11. Vorrichtung nach einem der Ansprüche 1 bis 10, dadurch gekennzeichnet, daß die beiden stabilen Konfigurationen erhalten werden durch unterschiedliche schräge Reibungen zwischen ihnen, die erzeugt werden auf der inneren Oberfläche der Platten (12, 14), beispielsweise durch zwei Reibungen eines Polymers, das auf den Platten (12, 14) abgeschieden ist, unter 45°.

12. Vorrichtung nach einem der Ansprüche 1 bis 10, dadurch gekennzeichnet, daß die beiden stabilen Konfigurationen erhalten werden durch Kontrolle der Dicke und der mittleren Wellenlänge der Rauheit auf der inneren Oberfläche der Platten (12, 14).

13. Vorrichtung nach Anspruch 12, dadurch gekennzeichnet, daß die Konfigurationen durch kontrollierte Aufdampfung auf die Platten (12, 14) erhalten werden.

14. Vorrichtung nach einem der Ansprüche 12 oder 13, dadurch gekennzeichnet, daß die Konfigurationen durch Aufdampfung von SiO unter einem Winkel in der Größenordnung von 74° in einer mittleren Dicke in der Größenordnung von 30 Å kontrolliert werden.

15. Vorrichtung nach einem der Ansprüche 12 bis 14, dadurch gekennzeichnet, daß die Aufdampfungsrichtungen auf die beiden Platten (12, 14) unter einem Azimutantenwinkel in der Größenordnung von 45° schräg zueinander sind.

16. Vorrichtung nach einem der Ansprüche 1 bis 15, dadurch gekennzeichnet, daß das Flüssigkristallmaterial mit einem Cholesterin dotiert ist.

17. Vorrichtung nach einer Kombination der Ansprüche 15 und 16, dadurch gekennzeichnet, daß das Cholesterin eine spontane Drehung des nematischen Flüssigkristallmaterials in einer Richtung umgekehrt zur Verschiebung hervorruft, die zwischen den beiden Aufdampfungsrichtungen auf die beiden jeweiligen Platten erzeugt wird, und mit einer Amplitude in der Größenordnung der Hälfte der Azimutanten-Verschiebung zwischen den beiden Aufdampfungsrichtungen.

18. Vorrichtung nach einem der Ansprüche 1 bis 17, dadurch gekennzeichnet, daß die Dicke der Zelle in der Größenordnung von 1,3 µm liegt.

19. Vorrichtung nach einem der Ansprüche 1 bis 18, dadurch gekennzeichnet, daß die Mittel zur Zuführung von elektrischer Energie (30) so konzipiert sind, daß Steuerimpulse einer Dauer zwischen 1 und 1000 µs aufgegeben werden können.

20. Vorrichtung nach einem der Ansprüche 1 bis 19, dadurch gekennzeichnet, daß die Mittel zur Zuführung von elektrischer Energie (30) so konzipiert sind, daß Steuerimpulse mit einer Amplitude zwischen 1 und 100 Volt aufgegeben werden können.

21. Vorrichtung nach einem der Ansprüche 1 bis 18, dadurch gekennzeichnet, daß die Mittel zur Zuführung von elektrischer Energie so konzipiert sind, daß nacheinander auf die Vorrichtung aufgegeben werden können:

- mindestens ein Steuerimpuls (Ca), der geeignet ist, eine im allgemeinen homogene homöotrope Orientierung des Flüssigkristalls zu induzieren, und dann
- ein Kontrollimpuls (Co) mit einer geringeren Amplitude als der Steuerimpuls und mit einer Polarität, die je nach dem erforderlichen Endzustand ausgewählt wird.

22. Vorrichtung nach Anspruch 21, in der die Steuerelektroden in N Reihen (18-1 bis 18-N) und M Kolonnen (19-I bis 19-M) angeordnet sind, die eine Matrix von NM Pixels an ihren Schnittstellen definieren, dadurch gekennzeichnet, daß die Steuerimpulse (Ca) nacheinander auf die N Elektroden der Reihe aufgegeben werden, während am Ende jedes Steuerimpulses Kontrollimpulse (Co) mit einer jeweils ausgewählten Polarität gleichzeitig auf die Gesamtheit der M Elektroden der Kolonne aufgegeben werden.

23. Optische Vorrichtung nach Anspruch 21 oder 22, dadurch gekennzeichnet, daß der Steuerimpuls (Ca) ein einzelner Rechteckimpuls ist.

24. Optische Vorrichtung nach Anspruch 21 oder 22, dadurch gekennzeichnet, daß der Steuerimpuls (Ca) aufeinanderfolgende Rechteckimpulse mit zueinander entgegengesetzten Polaritäten (Ca1, Ca2) umfaßt.

25. Optische Vorrichtung nach Anspruch 21 oder 22, dadurch gekennzeichnet, daß der Steuerimpuls (Ca) eine Reihe von Hochfrequenzimpulsen umfaßt.

**26.** Optische Vorrichtung nach einem der Ansprüche 21 bis 25, dadurch gekennzeichnet, daß die Amplitude der Steuerimpulse (Ca) zwischen 1 und 100 Volt, in der Regel zwischen 10 und 20 Volt, liegt.

**27.** Optische Vorrichtung nach einem der Ansprüche 21 bis 26, dadurch gekennzeichnet, daß die Dauer der Steuerimpulse (Ca) mehr als 1 µs beträgt, in der Regel zwischen 20 und 50 µs liegt.

**28.** Optische Vorrichtung nach einem der Ansprüche 21 bis 27, dadurch gekennzeichnet, daß die Amplitude der Kontrollimpulse (Co) zwischen 0,1 und 10 Volt, in der Regel zwischen 0,1 und 5 Volt, liegt.

**29.** Optische Vorrichtung nach einem der Ansprüche 21 bis 28, dadurch gekennzeichnet, daß die Dauer der Kontrollimpulse (Co) mehr als 10 µs beträgt, in der Regel zwischen 25 und 50 µs liegt.

**30.** Optische Vorrichtung nach einem der Ansprüche 21 bis 29, dadurch gekennzeichnet, daß der Beginn der Kontrollimpulse (Co) mit dem Ende der Steuerimpulse (Ca) zusammenfällt.

**31.** Optische Vorrichtung nach einem der Ansprüche 21 bis 29, dadurch gekennzeichnet, daß der Beginn der Kontrollimpulse (Co) dem Ende der Steuerimpulse (Ca) vorausgeht.

**32.** Optische Vorrichtung nach Anspruch 30 oder 31, dadurch gekennzeichnet, daß die Kontrollimpulse (Co) nach dem Ende der Steuerimpulse (Ca) noch mindestens 10 bis 50 µs lang andauern.

**33.** Optische Vorrichtung nach einem der Ansprüche 21 bis 32 in Kombination mit dem Anspruch 22, dadurch gekennzeichnet, daß der Beginn des Steuerimpulses (Ca) auf die Elektrode der Reihe i + 1 im wesentlichen mit dem Ende des Steuerimpulses (Ca) auf die Elektrode der Reihe i zusammenfällt.

**Claims**

**1.** Liquid crystal optical device of the type comprising two transparent plates (12, 14) provided with control electrodes (18, 19) and between which there is placed a liquid crystal material (20) and in which there are provided electrical supply means (30) capable of applying to the device voltages generating an electric field perpendicular to the plates (12, 14), oriented selectively in one direction or the other, characterized in that, in order to generate a bistable effect corresponding to two stable alternative configurations in the absence of a field:

- the transparent plates (12, 14) have a surface treatment capable of defining two stable configurations in the absence of a field of liquid crystal material molecules respectively generating two flexoelectric polarizations having components normal to the electrodes $P_z1$ $P_z2$ of opposite directions,
- the liquid crystal material is a nematic liquid crystal, and
- the electrical supply means (30) are designed to generate pulses which can switch the liquid crystal between its two stable configurations.

**2.** Device according to Claim 1, characterized in that the nematic liquid crystal (20) has a positive dielectric anisotropy.

**3.** Device according to one of Claims 1 and 2, characterized in that the nematic liquid crystal (20) has a positive dielectric anisotropy of the order of 10.

**4.** Device according to one of Claims 1 to 3, characterized in that the two stable configurations of molecules of the liquid crystal material correspond to liquid crystal textures with constant azimuth for a given configuration, offset in azimuth from one configuration to the other.

**5.** Device according to Claim 4, characterized in that the two stable configurations of molecules of the liquid crystal material correspond to textures with constant azimuth for a given configuration, offset by 45° to each other.

**6.** Device according to one of Claims 1 to 5, characterized in that the two stable configurations of molecules of the liquid crystal material have different zenithal orientations.

**7.** Device according to one of Claims 1 to 6, characterized in that one of the two stable configurations of molecules of the liquid crystal material corresponds to an orientation which is planar on a first plate (12) and oblique on a second plate (14), and the other corresponds to an orientation which is oblique on the first plate (12) and planar on the second plate (14).

**8.** Device according to one of Claims 1 to 7, characterized in that the liquid crystal cell comprising the two transparent plates (12, 14) is placed between a polarizer and an analyser which are crossed.

**9.** Device according to one of Claims 1 to 8, characterized in that liquid crystal material (20) is doped with non-chiral ions.

**10.** Device according to one of Claims 1 to 9, characterized in that the relative molar ion concentration is of the order of $10^{-3}$ to $10^{-5}$.

11. Device according to one of Claims 1 to 10, characterized in that the two stable configurations are obtained by different abrasions which are inclined to each other made on the internal surface of the plates (12, 14), for example, two abrasions at 45° of a polymer deposited on the plates (12, 14).

12. Device according to one of Claims 1 to 10, characterized in that the two stable configurations are obtained by controlling the thickness and the mean wavelength of the roughness on the internal surface of the plates (12, 14).

13. Device according to Claim 12, characterized in that the configurations are obtained by control evaporation on the plates (12, 14).

14. Device according to one of Claims 12 and 13, characterized in that the configurations are controlled by evaporation of SiO under an angle of the order of 74° with a mean thickness of the order of 30Å.

15. Device according to one of Claims 12 to 14, characterized in that the directions of evaporation on the two plates (12, 14) are relatively inclined of the order of 45° in azimuth.

16. Device according to one of Claims 1 to 15, characterized in that the liquid crystal material is doped with a cholesteric.

17. Device according to Claims 15 and 16 taken in combination, characterized in that the cholesteric defines a spontaneous rotation of the nematic liquid crystal material in an inverse direction to the offset formed between the two directions of evaporation on the two respective plates and of amplitude of the order of half the azimuthal offset between the two evaporation directions.

18. Device according to one of Claims 1 to 17, characterized in that the thickness of the cell is of the order of 1.3 μ.

19. Device according to one of Claims 1 to 18, characterized in that the electrical supply means (30) are designed in order to apply command pulses of a duration between 1 and 1000 μs.

20. Device according to one of Claims 1 to 19, characterized in that the electrical supply means (30) are designed in order to apply command pulses of an amplitude between 1 and 100 volt.

21. Device according to one of Claims 1 to 18, characterized in that the electrical supply means are designed in order to apply to the device in succession:

- at least one command pulse (Ca) capable of inducing a generally homeotropic homogeneous orientation of the liquid crystal, then
- a control pulse (Co), of amplitude less than the command pulse, and of polarity chosen according to the required final state.

22. Device according to Claim 21, in which the control electrodes are arranged in N lines (18-1 to 18-N) and M columns (19-1 to 19-M) defining a matrix of NM pixels at their intersections, characterized in that the command pulses (Ca) are applied successively onto the N line electrodes, while at the end of each command pulse, control pulses (Co) of respectively chosen polarity are applied simultaneously onto the whole of the M column electrodes.

23. Optical device according to Claim 21 or 22, characterized in that the command pulse (Ca) is a single square pulse.

24. Optical device according to Claim 21 or 22, characterized in that the command pulse (Ca) comprises successive square pulses of opposite polarities (Ca1, Ca2).

25. Optical device according to Claim 21 or 22, characterized in that the command pulse (Ca) comprises a high-frequency pulse train.

26. Optical device according to one of Claims 21 to 25, characterized in that the amplitude of the command pulses (Ca) is between 1 and 100 volts, typically between 10 and 20 volts.

27. Optical device according to one of Claims 21 to 26, characterized in that the duration of the command pulses (Ca) is greater than 1 μs, typically between 20 and 50 μs.

28. Optical device according to one of Claims 1 to 27, characterized in that the amplitude of the control pulses (Co) is between 0.1 and 10 volts, typically between 0.1 and 5 volts.

29. Optical device according to one of Claims 21 to 28, characterized in that the duration of the control pulses (Co) is greater than 10 μs, typically between 25 and 50 μs.

30. Optical device according to one of Claims 21 to 29, characterized in that the start of the control pulses (Co) coincides with the end of the command pulses (Ca).

31. Optical device according to one of Claims 21 to 29, characterized in that the start of the control pulses (Co) precedes the end of the command pulses (Ca).

32. Optical device according to Claim 30 or 31, characterized in that the control pulses (Co) persist after the end of the command pulses (Ca) for at least 10 µs to 50 µs.

33. Optical device according to one of Claims 21 to 32 taken in combination with claim 22, characterized in that the start of the command pulse (Ca) on the line electrode i + 1 coincides substantially with the end of the command pulse (Ca) on the line electrode i.

# FIG_1

# FIG_2

Molécules dans la première configuration

Molécules dans la seconde configuration

FIG_3

FIG_4

FIG_5A

FIG_5B

FIG_6A

FIG_6B

CH1  10 V          A 500μs  21.9mV  EXT 1
CH2  ZV

10V

t₁

t₀

CH1

CH2

100μs

500μs

## FIG_7

Tension seuil en fonction de la durée d'impulsion

épaisseur : d = 1μm

Tension Seuil (Volts)

Durée d'impulsion (μsec)

## FIG_8

Champ seuil en fonction de la durée d'impulsion

FIG_9

FIG.10

FIG.11

## FIG. 12

| état initial | état final | |
|---|---|---|
| | v > 0 | v < 0 |
| A | → B ($|v| < vs(z')$ et $V > 0$) <br><br> → A ($|v| > vs(z')$) | → B |
| B | → A | → A ($|v| < vs(z')$ et $V < 0$) <br><br> → B ($|v| > vs(z)$) |

## FIG. 13